# EUROPÄISCHE PATENTANMELDUNG

(11) **EP 4 640 489 A1**
(43) Veröffentlichungstag der Anmeldung: **29.10.2025**
(21) Anmeldenummer: 24171556.4
(22) Anmeldetag: 22.04.2024
(51) Int. Cl.: B60Q 1/00

(54) **BELEUCHTUNGSVORRICHTUNG FÜR EIN KRAFTFAHRZEUG UND VERFAHREN ZUR BELEUCHTUNG EINES KRAFTFAHRZEUGS**

(71) Anmelder: VOLKSWAGEN AKTIENGESELLSCHAFT, 38440 Wolfsburg (DE)
(72) Erfinder: Kreipe, Bernhard, 30177 Hannover (DE); Studeny, Christian, 38170 Schöppenstedt (Eitzum) (DE)

(57) **Zusammenfassung**

Beleuchtungsvorrichtung (1) für ein Kraftfahrzeug, mit einem ersten Lichtleiter (2) und wenigstens einem zweiten Lichtleiter (4), wobei in jeden Lichtleiter (2,4) jeweils Lichtstrahlen wenigstens eines Leuchtmittels (16, 14) über wenigstens eine dem Lichtleiter (2,4) zugeordnete Lichteinkoppelfläche (22, 24) einkoppelbar sind oder eingekoppelt werden und eingekoppelte Lichtstrahlen des Leuchtmittels jeweils über wenigstens eine Lichtauskoppelfläche (42, 44) wieder aus dem Lichtleiter (2,4) auskoppelbar sind oder ausgekoppelt werden, wobei der erste Lichtleiter (2) flächig ausgebildet ist, wobei Lichtstrahlen in den ersten Lichtleiter (2) randseitig einkoppelbar sind oder eingekoppelt werden und wobei die Lichtauskoppelflächen (24,44) der Lichtleiter (2,4) zumindest abschnittsweise in eine gleiche Lichtabstrahlrichtung (LA) weisen. Erfindungsgemäß ist der zweite Lichtleiter ein Linienlichtleiter, wobei das Licht über eine Kante aus dem zweiten Lichtleiter auskoppelbar ist und wenigstens abschnittsweise zwischen dem ersten Lichtleiter (2) und dem zweiten Lichtleiterelement (4) eine optische Separatoreinrichtung (6) angeordnet ist.

## Beschreibung

Die vorliegende Erfindung bezieht sich auf eine Beleuchtungsvorrichtung für ein Kraftfahrzeug und ein Verfahren zum Betreiben einer solchen Beleuchtungsvorrichtung. Die Erfindung wird unter Bezugnahme auf Rückleuchten eines Kraftfahrzeugs wie beispielsweise Bremsleuchten oder Fahrtrichtungsanzeigeleuchten beschrieben. Es wird jedoch darauf hingewiesen, dass die Erfindung auch für andere Fahrzeugbeleuchtungen geeignet ist.

Es ist aus dem Stand der Technik bekannt, dass für die Beleuchtungseinrichtungen Flächenlichtleiter eingesetzt werden. Auf diese Weise kann die Schlusslichtfunktion konzeptionell sehr gut umgesetzt werden. Soll jedoch mittels eines Flächenlichtleiters auch das Bremslicht oder die Fahrtrichtungsanzeige durchgeführt werden, sind Flächenlichtleiter zu ineffizient, da im Verhältnis zum Input - Lichtstrom zu wenig umgesetzt wird, und insbesondere zu wenig Licht, welches zur Erfüllung der gesetzlichen Anforderungen benötigt wird, ausgekoppelt wird.

Zu diesem Zweck wurde im internen Stand der Technik der Anmelderin vorgeschlagen, Flächenlichtleiter mit einem Linienlichtleiter zu koppeln. Dabei verfügten beide Lichtleiter über eine gemeinsame Lichteinspeisung und teilen sich auch eine Platine.

Aus dem Stand der Technik sind weiterhin klassische Funktionssteuerungen bekannt. Auch ist bekannt, Lichtfunktionen separat mit herkömmlichen Optiken auszuführen.

Teilweise tritt auch das Problem auf, dass die einzelnen Optikkonzepte aus designerischen Gesichtspunkten nicht zueinander passen.

Der vorliegenden Erfindung liegt daher die Aufgabe zugrunde, die Effizienz derartiger Beleuchtungsvorrichtungen zu erhöhen und insbesondere auch, die Lichtausbeute zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Beleuchtungsvorrichtung für ein Kraftfahrzeug weist (wenigstens) einen ersten Lichtleiter und wenigstens einem zweiten Lichtleiter auf, wobei in jedem Lichtleiter Lichtstrahlen wenigstens eines Leuchtmittels über wenigstens eine dem Lichtleiter zugeordnete Lichteinkoppelfläche einkoppelbar sind oder eingekoppelt werden. Weiterhin werden eingekoppelte Lichtstrahlen des Leuchtmittels jeweils über eine Lichtauskoppelfläche wieder aus dem Lichtleiter ausgekoppelt oder sind (aus dem Lichtleiter) auskoppelbar.

Weiterhin ist der erste Lichtleiter flächig ausgebildet, wobei Lichtstrahlen in den ersten Lichtleiter randseitig einkoppelbar sind oder eingekoppelt werden und wobei die Lichtauskoppelflächen der Lichtleiter zumindest abschnittsweise in eine gleiche Lichtstrahlrichtung weisen.

Unter einer randseitigen Einkopplung wird insbesondere verstanden, dass der Flächenlichtstrahler eine quaderförmige Gestalt mit zwei deutlich größeren Hauptflächen aufweist und die Einkopplung über eine der Schmalseiten erfolgt.

Erfindungsgemäß ist der zweite Lichtleiter ein Linienlichtleiter, wobei das Licht über eine Kante (und oder eine Seitenfläche) aus dem zweiten Lichtleiter auskoppelbar ist oder ausgekoppelt wird, wenigstens abschnittsweise ist zwischen dem ersten Lichtleiter und dem zweiten Lichtleiter eine (bevorzugt optische) Separatoreinrichtung angeordnet. Diese Separatoreinrichtung trennt bevorzugt wenigstens abschnittsweise den ersten Lichtleiter (insbesondere auch räumlich) von dem zweiten Lichtleiter.

Bevorzugt erstreckt sich der erste Lichtleiter wenigstens abschnittsweise senkrecht zu der Lichtabstrahlrichtung. Besonders bevorzugt erstreckt sich eine Abstrahlfläche (des ersten Lichtleiters) und insbesondere eine Abstrahlhauptfläche wenigstens abschnittsweise und bevorzugt vollständig senkrecht zu der Lichtabstrahlrichtung.

Bevorzugt erstreckt sich der zweite Lichtleiter wenigstens abschnittsweise senkrecht zu der Lichtabstrahlrichtung.

Besonders bevorzugt ist die Auskoppelfläche des ersten Lichtleiters größer als Auskoppelfläche des zweiten Lichtleiters. Besonders bevorzugt ist die Auskoppelfläche des ersten Lichtleiters wenigstens doppelt so groß, bevorzugt dreimal so groß, bevorzugt nächstens viermal so groß und bevorzugt nächstens fünfmal so groß wie die Auskoppelfläche des zweiten Lichtleiters.

Besonders bevorzugt ist die Lichtauskoppelfläche des zweiten Lichtleiters wenigstens abschnittsweise neben der Lichtauskoppelfläche des ersten Lichtleiters angeordnet und insbesondere seitlich neben dieser.

Bevorzugt erstrecken sich die Auskoppelflächen bzw. die Lichtauskoppelflächen des ersten Lichtleiters und des zweiten Lichtleiters in der gleichen Ebene oder in zueinander parallelen Ebenen.

Besonders bevorzugt erstrecken sich die Einkoppelflächen des ersten Lichtleiters und des zweiten Lichtleiters in der gleichen Ebene oder in zueinander parallelen Ebenen. Besonders bevorzugt stehen die Ebenen der Einkoppelflächen und die Ebenen der Auskoppelflächen wenigstens eines Lichtleiters und bevorzugt beider Lichtleiter zueinander in einem von 0° verschiedenen Winkel und sind besonders bevorzugt senkrecht zueinander.

Bevorzugt ist dem ersten Lichtleiter und dem zweiten Lichtleiter jeweils wenigstens ein Leuchtmittel zur Lichteinspeisung in den jeweiligen Lichtleiter zugeordnet. Bevorzugt ist das wenigstens eine Leuchtmittel zur Lichteinspeisung in den ersten Lichtleiter unabhängig von dem wenigstens einen Leuchtmittel zur Lichteinspeisung in den zweiten Lichtleiter betreibbar.

Bevorzugt handelt es sich bei dem Leuchtmittel und besonders bevorzugt bei den Leuchtmitteln (jeweils) um eine elektrisch betreibbare Lichtquelle, welche bevorzugt an mindestens einer Lichteintrittsseite des Lichtkörpers angebracht ist. Das Leuchtmittel ist bevorzugt als monochromes Licht aussendendes Leuchtmittel, insbesondere als LED (LED = light-emitting diode), oder als (insbesondere RGB-)LED zur Aussendung von insbesondere mehrfarbigem und/oder weißem Licht und/oder Lichts beliebiger Farbe ausgebildet.

Bei einer weiteren bevorzugten Ausführungsform sind beide Lichtleiter an oder auf einer gemeinsamen Platine angeordnet.

Bei einer weiteren bevorzugten Ausführungsform ist in einer Abstrahlrichtung zuerst der zweite Lichtleiter und dann der erste Lichtleiter vorgesehen. Bevorzugt ist also in der Abstrahlrichtung der erste Lichtleiter vor dem zweiten Lichtleiter angeordnet. Auf diese Weise wird die Lichtabstrahlung durch den ersten Lichtleiter nicht durch den zweiten Lichtleiter behindert.

Bei einer weiteren bevorzugten Ausführungsform deckt der zweite Lichtleiter den ersten Lichtleiter auf dessen Rückseite wenigstens teilweise und bevorzugt vollständig ab. Besonders bevorzugt umgreift der zweite Lichtleiter den ersten Lichtleiter wenigstens abschnittsweise, wobei besonders bevorzugt der zweite Lichtleiter im Querschnitt der Lichtleiter gesehen, insbesondere in einem Randbereich eine rückseitige Umlenkschräge für das (eingekoppelte) Licht aufweist. Besonders bevorzugt ist diese Umlenkschräge dazu geeignet und bestimmt, das Licht um zwischen 50° und 130°, bevorzugt um zwischen 60° und 120° und besonders bevorzugt um zwischen 70° und 110° und besonders bevorzugt um zwischen 80° und 100° umzulenken.

Besonders bevorzugt ist daher der zweite Lichtleiter dazu geeignet und bestimmt, in ihn eintretendes Licht wenigstens einmal um zu lenken und insbesondere um einen Winkel zwischen 70° und 110°, bevorzugt zwischen 80° und 100° und bevorzugt um einen Winkel von 90° umzulenken.

Es wird daher bevorzugt vorgeschlagen, dass ein Flächenlichtleiter mit einem Lichtleiter mit Kantenauskopplung (im Folgenden als Linienlichtleiter bezeichnet) kombiniert wird, wobei bevorzugt beide Lichtaustrittsflächen anteilig zu der jeweils geforderten Beleuchtungsfunktion beitragen.

Auf diese Weise wird ein Designelement, nämlich der Flächenlichtleiter durch einen Linienlichtleiter, welcher als Verstärkerelement wirkt, unterstützt. Beide Lichtleiter, d.h. der Flächenlichtleiter sowie der Linienlichtleiter werden bevorzugt von einer gemeinsamen Platine gespeist.

Bevorzugt ist die Separatoreinrichtung derart ausgestaltet und/oder angeordnet, dass (im Wesentlichen) keine optischen Übergänge zwischen dem ersten Lichtleiter und dem zweiten Lichtleiter erfolgen.

Mit anderen Worten verhindert die Separatoreinrichtung, dass in den ersten Lichtleiter eingekoppeltes Licht, welches in Richtung des zweiten Lichtleiters aus dem ersten Lichtleiter ausgekoppelt wird, auf den zweiten Lichtleiter trifft (insbesondere durch Streuung und/oder Reflexion an der Separatoreinrichtung). Bevorzugt verhindert die Separatoreinrichtung, dass in den zweiten Lichtleiter eingekoppeltes Licht, welches in Richtung des ersten Lichtleiters aus dem zweiten Lichtleiter ausgekoppelt wird, auf den ersten Lichtleiter trifft (insbesondere durch Streuung und/oder Reflexion an der Separatoreinrichtung). Hierdurch wird vorteilhaft erreicht, dass die beiden Lichtleiter unabhängig voneinander eine eigene Beleuchtungsfunktion erfüllen können und die jeweils zu erfüllende Beleuchtungsfunktion nicht durch unbeabsichtigt in den jeweils anderen Lichtleiter übertretende Strahlung ein unerwünschtes Mitleuchten hervorruft.

Bevorzugt ist in eine (Haupt-)Lichtabstrahlrichtung des ersten Lichtleiters und/oder des zweiten Lichtleiters (bzw. der Beleuchtungsvorrichtung) gesehen zwischen dem ersten Lichtleiter und dem zweiten Lichtleiter ein Bereich der Separatoreinrichtung angeordnet. Mit anderen Worten sind in die (Haupt-)Lichtabstrahlrichtung gesehen der erste Lichtleiter und der zweite Lichtleiter durch die Separatoreinrichtung vollständig voneinander (optisch) getrennt.

Denkbar ist, dass nur in einem Bereich zwischen dem ersten Lichtleiter und dem zweiten Lichtleiter, welcher (dessen Haupterstreckungsrichtung und bevorzugt dessen zwei Haupterstreckungsrichtungen) sich senkrecht zur (Haupt-) Lichtabstrahlrichtung erstreckt (bzw. erstrecken) eine Separatoreinrichtung angeordnet ist. Insbesondere ist in diesem Fall in einem Bereich zwischen dem ersten Lichtleiter und dem zweiten Lichtleiter, welcher (dessen Haupterstreckungsrichtung) sich parallel zur (Haupt-) Lichtabstrahlrichtung erstreckt, keine Separatoreinrichtung angeordnet. Dies bietet den Vorteil einer vereinfachten Herstellbarkeit und Versuche der Anmelderin haben gezeigt, dass eine derartige optische Trennung des ersten Lichtleiters vom zweiten Lichtleiter ausreichend ist.

Besonders bevorzugt ist in jedem Bereich zwischen dem ersten Lichtleiter und dem zweiten Lichtleiter, insbesondere auch in einem Bereich zwischen dem ersten Lichtleiter und dem zweiten Lichtleiter, welcher (dessen Haupterstreckungsrichtung) sich parallel zur (Haupt-) Lichtabstrahlrichtung erstreckt, die Separatoreinrichtung angeordnet. Hierdurch kann eine optischer Übergang zwischen den beiden Lichtleitern noch vollumfänglicher verhindert werden.

Zwischen den beiden Lichtleitern wird oder ist bevorzugt die Separatoreinrichtung platziert. Diese besteht besonders bevorzugt aus Kunststoff und besonders bevorzugt aus einem weißen Kunststoff. Wie unten genauer ausgeführt, unterstützt die Separatoreinrichtung die flächige Auskopplung von Licht des Flächenlichtleiters nach vorne (d.h. in der Abstrahlrichtung), insbesondere indem sie nach hinten ausgekoppeltes Licht nach vorne streut und/oder reflektiert.

Auf diese Weise trägt die Separatoreinrichtung zu einer Effizienzsteigerung und auch einer Homogenitätsverbesserung bei.

Bevorzugt wird weiterhin, wie unten genauer erläutert, eine Rückwand hinter dem hinteren Lichtleiter platziert. Diese lenkt bevorzugt nach hinten ausgekoppeltes Licht in den Lichtleiter zurück. Insbesondere wird Strahlung, die von einer Dachkante, bzw. Umlenkkante, nicht umgelenkt wird, durch die Rückwand nach vorn gestreut. Durch die Dachkante wird vorteilhaft eine Umlenkung des Lichts in einem Knick des Lichtleiters erreicht. Auf diese Weise trägt auch diese Rückwand zu einer deutlichen Effizienzsteigerung bei.

Bei einer besonders bevorzugten Ausführungsform weist die Beleuchtungsvorrichtung ein insbesondere flächiges Reflektorelement auf, welches von dem ersten Lichtleiter in eine der Abstrahlrichtung entgegengesetzten Richtung ausgegebenes Licht in die Abstrahlrichtung reflektiert und/oder streut oder dazu geeignet ist.

Bei einer weiteren bevorzugten Ausführungsform ist die Separatoreinrichtung das Reflektorelement oder das Reflektorelement wird durch die Separatoreinrichtung ausgebildet.

Bei einer bevorzugten Ausführungsform ist die Separatoreinrichtung wenigstens auf der dem ersten Lichtleiter zugewandten Oberfläche weiß oder metallisch. Dabei kann die Oberfläche glatt oder strukturiert/rau ausgeführt sein. Auf diese Weise kann die Reflexionswirkung erhöht werden. Bevorzugt ist die Separatoreinrichtung aus einem einheitlichen Material ausgestaltet.

Bei einer weiteren bevorzugten Ausführungsform liegt die Separatoreinrichtung ausschließlich flächig an genau einer Oberfläche und insbesondere an einer rückseitigen Oberfläche des ersten Lichtleiters an. Liegt die Separatorwand an, erhöht dies die parasitäre Auskopplung aus dem Lichtleiter. Daher ist eine Anordnung mit Luftspalt zwischen Lichtleiter und Separator bevorzugt.

Bei einer weiteren bevorzugten Ausführungsform fasst die Separatoreinrichtung den ersten Lichtleiter wenigstens abschnittsweise ein. Bei dieser Ausführungsformen ist daher die Separatoreinrichtung als umgreifende Separatoreinrichtung ausgeführt.

Bevorzugt weist die Separator Einrichtung eine um einen vorgegebenen Winkel und insbesondere um 90° abgewinkelte Seite auf.

Bei der genannten ersten Ausführungsform des flächigen Anliegens liegen bevorzugt die Lichtleiter in ihrer Haupterstreckungsrichtung (bzw. an einer Seitenkante) unmittelbar aneinander an bzw. liegen randseitig aneinander. In der zweiten Ausführungsform werden die Lichtleiter bevorzugt auch in einer Haupterstreckungseinrichtung, welche bevorzugt senkrecht zur Abstrahlrichtung liegt, von der Separatoreinrichtung räumlich getrennt.

Bei einer weiteren bevorzugten Ausführungsform ist wenigstens ein Lichtleiter aus Kunststoff, bevorzugt aus PC und/oder PMMA und/oder einem PC- bzw. PMMA-Streumaterial hergestellt. Bevorzugt ist der erste Lichtleiter aus Kunststoff, bevorzugt aus PC und/oder PMMA und/oder einem PC- bzw. PMMA-Streumaterial hergestellt. Der zweite Lichtleiter ist bevorzugt aus PMMA und/oder einem PC und insbesondere aus klarem PMMA hergestellt. Beispielsweise könnte LD12 als Herstellungsmaterial für den ersten Lichtleiter verwendet werden.

Bevorzugt werden oder sind daher die Lichtleiter zumindest in einem Teilbereich durch die Separatoreinrichtung getrennt. Insbesondere sind die Lichtleiter in der Abstrahlrichtung vollständig voneinander durch die Separatoreinrichtung getrennt.

Bei einer weiteren bevorzugten Ausführungsform ist in der Abstrahlrichtung hinter wenigstens einem Lichtleiter und insbesondere hinter dem zweiten Lichtleiter wenigstens abschnittsweise eine Rückwand angeordnet.

Bevorzugt ist diese Rückwand dazu geeignet und bestimmt, wenigstens einen Anteil an Strahlung in die Abstrahlrichtung zu reflektieren und/oder zu streuen. Besonders bevorzugt liegt diese Rückwand wenigstens abschnittsweise und/oder flächig an dem zweiten Lichtleiter an.

Damit kann bevorzugt die Lichtausbeute der Beleuchtungsvorrichtung verbessert werden. Besonders bevorzugt ist diese Rückwand parallel zu der Separatoreinrichtung angeordnet bzw. erstreckt sich wenigstens abschnittsweise parallel zu der Separatoreinrichtung.

Bei einer weiteren bevorzugten Ausführungsform fasst die Rückwand wenigstens abschnittsweise (und bevorzugt vollständig) einen Lichtleiter und insbesondere den hinteren bzw. zweiten Lichtleiter ein.

Bei weiteren bevorzugten Ausführungsform ist der zweite Lichtleiter ebenfalls wenigstens abschnittsweise flächig ausgebildet, wobei eine Randseite des zweiten Lichtleiters als dessen Einkoppelfläche dient und eine andere Randseite des Lichtleiters als dessen Lichtauskoppelfläche dient.

Bei einer weiteren bevorzugten Ausführungsform ist der zweite Lichtleiter stabartig ausgebildet, wobei eine Stirnseite des zweiten Lichtleiters als dessen Lichteinkoppelfläche dient und eine andere Stirnseite des zweiten Lichtleiters als dessen Lichtauskoppelfläche dient.

Weiterhin wäre es auch denkbar, dass die Beleuchtungsvorrichtung mehrere zweite Lichtleiter aufweist.

Bei einer bevorzugten Ausführungsform tragen die Lichtauskoppelflächen des ersten und des zweiten Lichtleiters anteilig zur Beleuchtungsfunktion bei. Dabei kann durch den ersten Lichtleiter eine Grundbeleuchtung realisiert werden und bevorzugt durch den zweiten Lichtleiter eine Verstärkung.

Bevorzugt ist ein Verhältnis der Lichtauskoppelfläche des ersten Lichtleiters (Flächenlichtleiter) zur Lichtauskoppelfläche des zweiten Lichtleiters größer gleich 2:1. Durch eine größere Lichtauskoppelfläche des ersten Lichtleiters kann etwa eine im Vergleich zum zweiten Lichtleiter weniger performante Optik ausgeglichen werden.

Bevorzugt ist die Oberfläche der Lichtauskoppelfläche des ersten Lichtleiters homogen ausgestaltet. Bevorzugt weist der erste Lichtleiter eine Vielzahl an Streustrukturen auf, so dass vorteilhaft eine homogene Abstrahlung erreicht werden kann. Insbesondere weist der erste Lichtleiter je Volumeneinheit mehr Streustrukturen auf als der zweite Lichtleiter.

Bei einer bevorzugten Ausführungsform bestehen die Separatoreinrichtung und/oder die Rückwand aus einem eingefärbten Kunststoff. Besonders bevorzugt bestehen sie aus einem weißen Kunststoff.

Bei einer weiteren bevorzugten Ausführungsform ist die Separatoreinrichtung und/oder die Rückwand wenigstens teilweise mit einer Beschichtung ausgeführt. Vorteilhaft handelt es sich hierbei um eine metallische Beschichtung.

Bei einer weiteren vorteilhaften Ausführungsform weist die Separatoreinrichtung und/oder die Rückwand an der jeweils in die Abstrahlrichtung weisenden Richtung eine Strukturierung auf. Vorzugsweise handelt es sich bei dieser Strukturierung um eine Narbung.

Die vorliegende Erfindung ist weiterhin auf ein Kraftfahrzeug mit einer Beleuchtungsvorrichtung der oben beschriebenen Art gerichtet. Bei diesem Kraftfahrzeug kann sich insbesondere um einen Pkw, einen Lkw oder einen Bus handeln. Es wäre jedoch auch die Anwendung der Erfindung auf andere Transportmittel wie beispielsweise auf Boote, Schiffe, Flugzeuge und dergleichen denkbar.

Die vorliegende Erfindung ist weiterhin auf ein Verfahren zur Beleuchtung eines Kraftfahrzeugs mittels wenigstens einem ersten Lichtleiter und wenigstens einem zweiten Lichtleiter gerichtet, wobei in jeden Lichtleiter jeweils Lichtstrahlen wenigstens eines Leuchtmittels über eine dem Lichtleiter zugeordnete Lichteinkoppelfläche eingekoppelt werden und eingekoppelte Lichtstrahlen des Leuchtmittels jeweils über wenigstens eine Lichtauskoppelfläche wieder aus dem Lichtleiter ausgekoppelt werden.

Dabei ist der erste Lichtleiter flächig ausgebildet, wobei Lichtstrahlen in den ersten Lichtleiter randseitig eingekoppelt werden und wobei die Lichtauskoppelflächen der Lichtleiter zumindest abschnittsweise in eine Lichtabstrahlrichtung weisen und/oder die Lichtleiter die Lichtstrahlen in dieser Lichtabstrahlrichtung auskoppeln.

Erfindungsgemäß ist der zweite Lichtleiter ein Linienlichtleiter, wobei das Licht über eine Kante aus dem zweiten Lichtleiter ausgekoppelt wird und wenigstens abschnittsweise zwischen dem ersten Lichtleiter und dem zweiten Lichtleiter eine optische Separatoreinrichtung angeordnet ist oder wird.

Besonders bevorzugt ist die Beleuchtungsvorrichtung derart ausgeführt, dass sie auch in bestehende Kraftfahrzeuge nachgerüstet werden kann.

Bevorzugt sind die den Lichtleitern zugeordneten Lichteinkoppelflächen Leuchtmitteln zugewandt, die besonders bevorzugt auf einer den Lichtleitern zugeordneten gemeinsamen Platine angeordnet sind. Mit anderen Worten trägt hier eine Platine alle diejenigen Leuchtmittel, deren Licht in die Lichtleiter eingekoppelt wird.

Hierdurch kann erreicht werden, dass die Beleuchtungsvorrichtung sehr kompakt aufgebaut werden kann, sodass mit dieser auf effektive Weise mehrere Lichtfunktionen bzw. Beleuchtungsfunktionen realisierbar sind.

Die Beleuchtungsvorrichtung kann beispielsweise als Heckleuchte oder auch als Scheinwerfer für ein Kraftfahrzeug ausgebildet sein.

Bevorzugt ist durch die Beleuchtungsvorrichtung eine Signalbeleuchtungsfunktion erfüllbar.

Bevorzugt ist der erste Lichtleiter (Flächenlichtleiter) als Schlusslicht verwendbar und/oder einsetzbar.

Bevorzugt wird mittels dem ersten Lichtleiter und mittels dem zweiten Lichtleiter (also durch eine Kombination des Flächenlichtleiters mit dem Linienlichtleiter) wenigstens eine Beleuchtungsfunktion realisiert, welche ausgewählt ist aus einer Gruppe von Beleuchtungsfunktionen, welche eine Bremslichtfunktion, eine Beleuchtungsfunktion eines Fahrtrichtungsanzeigers, eine Rückfahrlichtfunktion, eine Nebelschlussleuchtfunktion und dergleichen umfasst.

Bevorzugt ist der erste Lichtleiter (Flächenlichtleiter) als Positionsleuchte und der zweite Lichtleiter zur Unterstützung der Positionsleuchte oder eines Fahrtrichtungsanzeigers verwendbar und/oder einsetzbar. Bevorzugt kann hier der erste Lichtleiter als auch der zweite Lichtleiter weißes Licht ausstrahlen bzw. ausgeben.

Bevorzugt ist der erste Lichtleiter (Flächenlichtleiter) als Tagfahrlicht und der zweite Lichtleiter (Linienlichtleiter) als Fahrtrichtungsanzeiger oder zur Unterstützung des Tagfahrlichts verwendbar und/oder einsetzbar. Dies bietet den Vorteil, dass der Linienlichtleiter dazu beitragen kann, die hohen Anforderungen an Lichtstärken des Tagfahrlichts zu erfüllen. Unter flächig im Sinne der Erfindung ist vorteilhaft zu verstehen, dass ein Bauteil eine in zwei zueinander senkrecht stehenden Richtungen verlaufende Flächenerstreckung aufweist, die bevorzugt in jeder Richtung um ein mehrfaches größer ist als eine Dicke des Bauteils.

In einer alternativen Ausführungsform ist es auch möglich, dass sich die Lichtauskoppelfläche des zweiten Lichtleiters in einer Draufsicht auf die Beleuchtungsvorrichtung entgegen der Lichtabstrahlrichtung gesehen innerhalb der Lichtauskoppelfläche des ersten Lichtleiters befindet.

Bei einer weiteren vorteilhaften Ausführungsform wäre es, um die Herstellkosten zu senken, auch denkbar, dass die Lichtleiter und/oder die Separatoreinrichtung in einer weiteren Ausbildung der Erfindung einstückig (also insbesondere stoffschlüssig) miteinander verbunden werden.

Falls die Lichtleiter aus Kunststoff hergestellt sind, können diese beispielsweise in einen Spritzgussverfahren hergestellt werden. Bei einer weiteren vorteilhaften Ausführungsform kann die Lichtauskoppelfläche des zweiten Lichtleiters mit einer Auskoppeloptik (beispielsweise einer Kissen- oder Walzenoptik) versehen sein. Dies ist dann zweckmäßig, wenn die beiden Lichtleiter nicht einstückig mit einander verbunden sind.

Bevorzugt weist die Lichtleiteranordnung gemäß einer weiteren bevorzugten Ausführungsform ein Kantenauskopplungselement auf, welches zumindest teilweise an einer Randfläche des Flächenlichtleiters bzw. des ersten Lichtleiters angeordnet ist und dazu ausgelegt ist, ein über die Randfläche des Flächenlichtleiters in das Kantenauskopplungselement eintretendes Licht in einen vorbestimmten Winkelbereich umzulenken und aus der Lichtleiteranordnung auszukoppeln. Die Auskopplung des Lichts aus der Lichtleiteranordnung erfolgt dabei insbesondere als eine gerichtete Auskopplung, d.h. dass sich die Auskopplung insbesondere nicht auf eine diffuse Auskopplung, wie etwa durch eine Streuung des Lichts, beschränkt.

Die Randfläche ist bevorzugt eine den Flächenlichtleiter senkrecht zur Lichtleiterfläche begrenzende Fläche. Beispielsweise kann die Randfläche durch eine Stirnseite und/oder durch eine Kante des Flächenlichtleiters gebildet sein. Die Randfläche muss dabei nicht zwingend eine geschlossene Fläche darstellen, sondern kann auch durch mehrere Flächenelemente oder sonstige Begrenzungen des Flächenlichtleiters gebildet sein. Die Randfläche kann zwar senkrecht zur Lichtleiterfläche ausgebildet sein, jedoch ist dies nicht zwingend erforderlich.

Außerdem umfasst die Lichtleiteranordnung bevorzugt ein Kantenauskopplungselement, welches besonders bevorzugt zumindest teilweise an der Randfläche des Flächenlichtleiters angeordnet ist und dazu ausgelegt ist, ein über die Randfläche des Flächenlichtleiters in das Kantenauskopplungselement eintretendes Licht in einen vorbestimmten Winkelbereich umzulenken und aus der Lichtleiteranordnung auszukoppeln.

Die Auskopplung des Lichts aus der Lichtleiteranordnung erfolgt dabei insbesondere als eine gerichtete Auskopplung, d.h. dass sich die Auskopplung insbesondere nicht auf eine diffuse Auskopplung, wie etwa durch eine Streuung des Lichts, beschränkt.

Das Kantenauskopplungselement ist dabei bevorzugt ein optisches Element, welches zur Auskopplung von Licht aus dem Flächenlichtleiter dient, oder umfasst ein solches. Das Kantenauskopplungselement kann einstückig mit dem Flächenlichtleiter ausgebildet sein oder an diesem befestigt sein. Insbesondere kann das Kantenauskopplungselement die Funktion innehaben, eine Reflexion des Lichts an der Randfläche des Flächenlichtleiters zurück in den Flächenlichtleiter zumindest teilweise zu vermeiden und das durch die Randfläche hindurchtretende Licht in den vorbestimmten Winkelbereich auszukoppeln. Optional kann das Kantenauskopplungselement als 1-K oder 2-K Bauteil gegossen sein. Optional kann das Kantenauskopplungselement mittels eines Clips an dem Flächenlichtleiter befestigt sein und/oder mit diesem verklebt sein.

Bevorzugt ist die Beleuchtungsvorrichtung dazu eingerichtet, geeignet und/oder bestimmt, das obig beschriebene Verfahren sowie alle bereits obig im Zusammenhang mit dem Verfahren beschriebene Verfahrensschritte einzeln oder in Kombination miteinander auszuführen. Umgekehrt kann das Verfahren mit allen im Rahmen der Beleuchtungsvorrichtung beschriebenen Merkmalen einzeln oder in Kombination miteinander ausgestattet sein.

Die vorliegende Erfindung ist weiterhin gerichtet auf ein Fahrzeug, insbesondere Kraftfahrzeug, umfassend eine obig beschriebene Beleuchtungsvorrichtung für ein Fahrzeug entsprechend einer Ausführungsform gerichtet. Bei dem Fahrzeug kann es sich insbesondere um ein (motorisiertes) Straßenfahrzeug handeln.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Weitere Vorteile und Ausführungsformen ergeben sich aus den beigefügten Zeichnungen:
Darin zeigen:
- Fig. 1: eine schematische Darstellung einer erfindungsgemäßen Beleuchtungsvorrichtung.
- Fig. 2: einzelne Elemente der Beleuchtungsvorrichtung;
- Fig. 3: eine erste Variante einer Beleuchtungsvorrichtung;
- Fig. 4: eine zweite Variante einer Beleuchtungsvorrichtung.

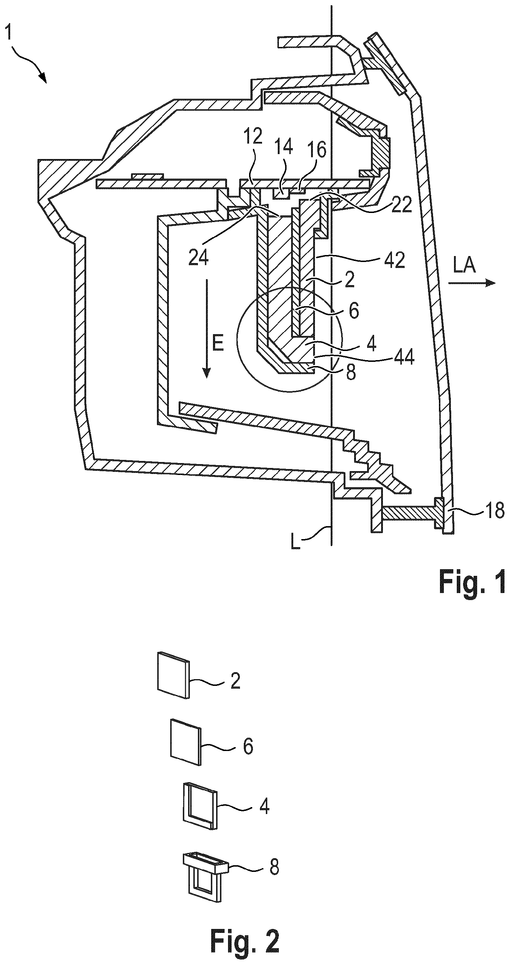

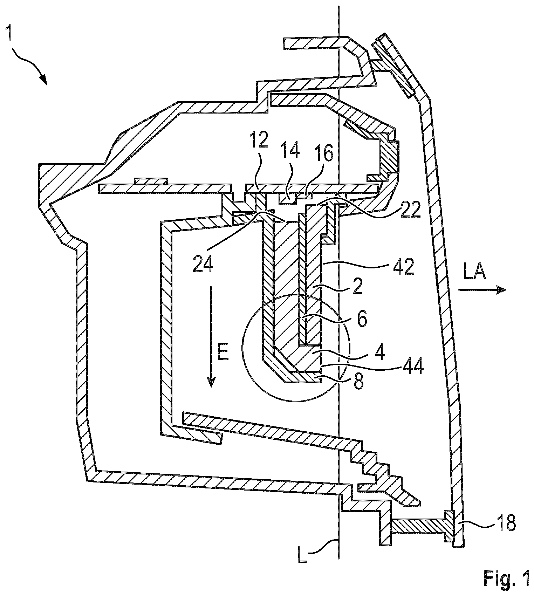

Figur 1 zeigt eine Schnittdarstellung einer erfindungsgemäßen Beleuchtungsvorrichtung 1. Diese weist einen ersten Lichtleiter 2 und einen zweiten Lichtleiter 4 auf. Über Einkoppelflächen 22 und 42 kann Licht von Beleuchtungseinrichtungen 16, 14 in die Lichtleiter 2, 4 (insbesondere entlang einer Erstreckungsrichtung L) eingekoppelt werden. Die Beleuchtungseinrichtungen 14 und 16 sind an einer gemeinsamen Platine 12 angeordnet.

Die Bezugszeichen 42 und 44 zeigen zwei Lichtauskoppelflächen, über welche das Licht aus den jeweiligen Lichtleitern 2 und 4 ausgekoppelt werden kann. Dabei erfolgt bei dem ersten Lichtleiter 2 eine flächige Auskopplung über eine entsprechende Auskoppelfläche 42 (die sich in der Erstreckungsrichtung E und eine zu der Figurenebene senkrecht stehende Richtung erstreckt und bei dem Lichtleiter 4 eine Lichtauskopplung über eine Lichtauskoppelfläche 44 bzw. randseitig.

Zwischen den beiden Lichtleitern 2,4 ist eine Separatoreinrichtung 6 angeordnet, welche in Richtung des Lichtaustritts LA den ersten Lichtleiter 2 und den zweiten Lichtleiter 4 voneinander separiert bzw. trennt.

Das Bezugszeichen 8 kennzeichnet eine Rückwand, die hinter dem zweiten Lichtleiter 4 (bezogen auf die Lichtabstrahlrichtung LA) angeordnet ist.

Die Figur 2 zeigt einzelne der oben genannten Elemente, nämlich den ersten Lichtleiter 2, den zweiten Lichtleiter 4, die Separatoreinrichtung 6 und die Rückwand 8

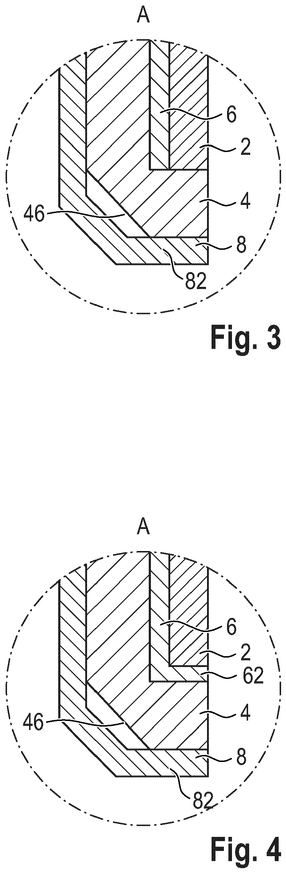

Die Fig. 3 und 4 zeigen zwei Detaildarstellungen von Varianten der in Fig. 1 gezeigten Beleuchtungsvorrichtung. Dabei erkennt man, dass der zweite Lichtleiter einen schräg verlaufenden Bereich 46 aufweist, der eine Umlenkung der Lichtstrahlen bewirkt.

Weiterhin erkennt man, dass die Separatoreinrichtung 6 als flächiges bzw. plattenartiges Element ausgeführt ist, welches zwischen dem ersten Lichtleiter 2 und dem zweiten Lichtleiter 4 angeordnet ist. Weiterhin erkennt man auch, dass der Lichtleiter 4 den ersten Lichtleiter einfasst.

Das Bezugszeichen 8 kennzeichnet wiederum die Rückwand, welche auch hier einen Abschnitt 82 aufweist, der den zweiten Lichtleiter 4 einfasst.

Bei der in Fig. 4 gezeigten Ausgestaltung weist auch die Separatoreinrichtung einen Steg auf, der zum Einfassen des ersten Lichtleiters 2 dient.

Bei einer weiteren vorteilhaften Ausführungsform weist die Separatoreinrichtung in der Abstrahlrichtung eine Dicke auf, die größer ist als 0,1 mm.

Besonders bevorzugt weist die Separatoreinrichtung in der Abstrahlrichtung eine Dicke auf, die kleiner ist als 3mm.

Besonders bevorzugt ist wenigstens eine Lichteinkoppelfläche und sind vorzugsweise beide Lichteinkoppelflächen mit einer Antireflexbeschichtung versehen. Diese verhindert eine Reflexion der Lichtstrahlen im Bereich des Lichteintritts. Auf diese Weise kann die Effizienz der Lichteinkopplung erhöht werden.

Besonders bevorzugt sind die oben genannten Bauteile in einem gemeinsamen Gehäuse untergebracht. Das Bezugszeichen 18 kennzeichnet eine Abschlussscheibe (vgl. Fig 1).

In der Lichtabstrahlrichtung, die hier ausgehend von den Lichtleitern horizontal nach rechts verläuft (vgl. Fig. 1) ist eine Lichtaustrittsöffnung des Gehäuses vorgesehen, welche insbesondere durch die Abschlussscheibe 18 verschlossen ist. Bei einer weiteren bevorzugten Ausführungsformen ist der erste Lichtleiter 2 in einem Randbereich von einer insbesondere rahmenartigen Blende in der Lichtabstrahlrichtung abgedeckt.

Die Leuchtmittel 14, 16 können in konventioneller Weise ausgewählt werden. Es wäre jedoch auch denkbar, dass die Leuchtmittel als sog. RGB Leuchtdioden ausgebildet sind. Diesen sind bevorzugt in der Lage, Licht in beliebiger Farbe auszugeben.

Bevorzugt ist der erste Lichtleiter derart ausgestaltet und/oder die Beleuchtungsvorrichtung derart ausgestaltet, dass eine über die gesamte Lichteinkoppelfläche des ersten Lichtleiters eingekoppelte Lichtstärke bzw. Strahlungsintensität zu einem Anteil über die Lichtauskoppelfläche des ersten Lichtleiters aus diesem ausgekoppelt wird, welcher wenigstens 50%, bevorzugt wenigstens 60%, bevorzugt wenigstens 80% und besonders bevorzugt wenigstens 90% beträgt.

Besonders bevorzugt sind die Lichtauskoppelflächen des Lichtleiters 2 derart ausgerichtet, dass ihre gedachten Flächennormalen in die Lichtabstrahlrichtung weisen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Beleuchtungsvorrichtung
- 2: erster Lichtleiter
- 4: zweiter Lichtleiter
- 6: Separatoreinrichtung
- 8: Rückwand
- 12: Platine
- 14: Leuchtmittel
- 16: Leuchtmittel
- 18: Abschlussscheibe
- 22: Lichteinkoppelfläche des ersten Lichtleiters
- 24: Lichteinkoppelfläche des zweiten Lichtleiters
- 42: Lichtauskoppelfläche des ersten Lichtleiters
- 44: Lichtauskoppelfläche des zweiten Lichtleiters
- 46: schräg verlaufender Bereich des zweiten Lichtleiters
- 62: Steg
- 82: Abschnitt der Rückwand
- L: Erstreckungsrichtung
- LA: Lichtabstrahlrichtung
- E: Erstreckungsrichtung

## Patentansprüche

1. Beleuchtungsvorrichtung (1) für ein Kraftfahrzeug, mit einem ersten Lichtleiter (2) und wenigstens einem zweiten Lichtleiter (4), wobei in jeden Lichtleiter (2,4) jeweils Lichtstrahlen wenigstens eines Leuchtmittels (16, 14) über wenigstens eine dem Lichtleiter (2,4) zugeordnete Lichteinkoppelfläche (22, 24) einkoppelbar sind oder eingekoppelt werden und eingekoppelte Lichtstrahlen des Leuchtmittels jeweils über wenigstens eine Lichtauskoppelfläche (42, 44) wieder aus dem Lichtleiter (2,4) auskoppelbar sind oder ausgekoppelt werden, wobei der erste Lichtleiter (2) flächig ausgebildet ist, wobei Lichtstrahlen in den ersten Lichtleiter (2) randseitig einkoppelbar sind oder eingekoppelt werden und wobei die Lichtauskoppelflächen (42,44) der Lichtleiter (2,4) zumindest abschnittsweise in eine gleiche Lichtabstrahlrichtung (LA) weisen, **dadurch gekennzeichnet, dass** der zweite Lichtleiter (4) ein Linienlichtleiter ist, wobei das Licht über eine Kante (44) aus dem zweiten Lichtleiter auskoppelbar ist und wenigstens abschnittsweise zwischen dem ersten Lichtleiter (2) und dem zweiten Lichtleiterelement (4) eine optische Separatoreinrichtung (6) angeordnet ist.

2. Beleuchtungsvorrichtung (1) nach Anspruch 1,
**dadurch gekennzeichnet, dass** die Beleuchtungsvorrichtung (1) ein insbesondere flächiges Reflektorelement (6) aufweist, welches von dem ersten Lichtleiter (2) in eine der Abstrahlrichtung (LA) entgegengesetzten Richtung ausgegebenes Licht in die Abstrahlrichtung (LA) reflektiert oder dazu geeignet ist.

3. Beleuchtungsvorrichtung (1) nach Anspruch 2,
**dadurch gekennzeichnet, dass**
das Reflektorelement die Separatoreinrichtung (6) ist oder durch die Separatoreinrichtung (6) ausgebildet ist oder wird.

4. Beleuchtungsvorrichtung (1) nach wenigstens einem der vorangegangenen Ansprüche, **dadurch gekennzeichnet, dass** die Separatoreinrichtung (6) ausschließlich flächig an genau einer Oberfläche und insbesondere an einer rückseitigen Oberfläche des ersten Lichtleiters (2) anliegt oder dass die Separatoreinrichtung den ersten Lichtleiter wenigstens abschnittsweise einfasst.

5. Beleuchtungsvorrichtung (1) nach wenigstens einem der vorangegangenen Ansprüche, **dadurch gekennzeichnet, dass** wenigstens ein Lichtleiter (2, 4) aus Kunststoff, bevorzugt aus PC und/oder PMMA und/oder einem PC- bzw. PMMA-Streumaterial hergestellt ist.

6. Beleuchtungsvorrichtung (1) nach wenigstens einem der vorangegangenen Ansprüche, **dadurch gekennzeichnet, dass** in der Abstrahlrichtung hinter wenigstens einem Lichtleiter (4) und insbesondere hinter dem zweiten Lichtleiter (4) wenigstens abschnittsweise eine Rückwand (8) angeordnet ist, wobei diese Rückwand (8) bevorzugt dazu geeignet und bestimmt ist, wenigstens einen Anteil an Strahlung in die Abstrahlrichtung zu strahlen und insbesondere zu streuen und/oder wenigstens einen Anteil an Strahlung in den Lichtleiter zurückzustreuen.

7. Beleuchtungsvorrichtung (1) nach wenigstens einem der vorangegangenen Ansprüche, **dadurch gekennzeichnet, dass** der zweite Lichtleiter (4) ebenfalls flächig ausgebildet ist, wobei eine Randseite des zweiten Lichtleiters als dessen Lichteinkoppelfläche (24) dient und eine andere Randseite (44) des Lichtleiters (4) als dessen Lichtauskoppelfläche dient oder der zweite Lichtleiter (4) stabartig ausgebildet ist, wobei eine Stirnseite des Lichtleiters (4) als dessen Lichteinkoppelfläche (24) dient und eine andere Stirnseite des Lichtleiters (2) als dessen Lichtauskoppelfläche (44) dient.

8. Beleuchtungsvorrichtung (1) nach wenigstens einem der vorangegangenen Ansprüche, **dadurch gekennzeichnet, dass** die Lichtauskoppelflächen (42, 44) des ersten und des zweiten Lichtleiters (2, 4) anteilig zu einer Beleuchtungsfunktion beitragen.

9. Kraftfahrzeug (1) mit einer Beleuchtungsvorrichtung (1) nach wenigstens einem der vorangegangenen Ansprüche.

10. Verfahren zur Beleuchtung eines Kraftfahrzeugs mittels wenigstens einem ersten Lichtleiter (2) und wenigstens einem zweiten Lichtleiter (4), wobei in jeden Lichtleiter (2,4) jeweils Lichtstrahlen wenigstens eines Leuchtmittels (16, 14) über wenigstens eine dem Lichtleiter (2,4) zugeordnete Lichteinkoppelfläche (22, 24) eingekoppelt werden und eingekoppelte Lichtstrahlen des Leuchtmittels jeweils über wenigstens eine Lichtauskoppelfläche (42, 44) wieder aus dem Lichtleiter (2,4) ausgekoppelt werden, wobei der erste Lichtleiter (2) flächig ausgebildet ist, wobei Lichtstrahlen in den ersten Lichtleiter (2) randseitig eingekoppelt werden wobei die Lichtauskoppelflächen (24,44) der Lichtleiter (2,4) zumindest abschnittsweise in eine gleiche Lichtabstrahlrichtung (LA) weisen, **dadurch gekennzeichnet, dass** der zweite Lichtleiter (4) ein Linienlichtleiter (4) ist, wobei das Licht über eine Kante aus dem zweiten Lichtleiter (4) ausgekoppelt wird und wenigstens abschnittsweise zwischen dem ersten Lichtleiter (2) und dem zweiten Lichtleiterelement (4) eine optische Separatoreinrichtung (6) angeordnet wird.
